# EUROPEAN PATENT SPECIFICATION

(11) **EP 4 435 231 B1**
(45) Date of publication and mention of the grant of the patent: **19.08.2026**
(21) Application number: 24161372.8
(22) Date of filing: 05.03.2024
(51) Int. Cl.: F01D 5/18, F01D 5/28, F01D 25/12

(54) **FORMING COOLING APERTURE(S) IN A TURBINE ENGINE COMPONENT**
HERSTELLUNG VON KÜHLÖFFNUNGEN IN EINER TURBINENMOTORKOMPONENTE
FORMATION D'OUVERTURES DE REFROIDISSEMENT DANS UN COMPOSANT DE MOTEUR À TURBINE

(30) Priority: 05.03.2023 US 202318117450
(43) Date of publication of application: 25.09.2024
(73) Proprietor: RTX Corporation, Farmington, CT 06032 (US)
(72) Inventor: CRAIG, Brian R., Tequesta, 33469 (US); DENNEY, Paul E., Northborough, 01532 (US); BIALKA, Derek J., Ellington, 06029 (US)
(74) Representative: Dehns

(56) References cited:
- US-A1- 2007 119 832
- US-A1- 2016 263 707
- US-A1- 2023 047 576
- US-B1- 6 441 341
- US-B2- 7 820 267
- US-B2- 9 598 979

## Description

### BACKGROUND OF THE DISCLOSURE

### 1. Technical Field

This invention relates generally to a turbine engine and, more particularly, to formation of cooling apertures in a component of the turbine engine.

### 2. Background Information

A gas turbine engine includes various fluid cooled components such as turbine blades and turbine vanes. Such fluid cooled components may include one or more cooling apertures extending through a sidewall of the respective component. Various methods are known in the art for forming cooling apertures. While these known cooling aperture formation methods have various benefits, there is still room in the art form improvement.

US 2016/263707 A1 discloses a prior art manufacturing method as set forth in the preamble of claim 1.

US 9 598 979 B2 discloses prior art manufacturing methods for multi-lobes cooling holes.

US 2023/047576 A1 discloses prior art methods of forming and/or inspecting cooling apertures in a turbine engine component.

US 2007/119832 A1 discloses a prior art method for the production of a hole and device.

### SUMMARY OF THE DISCLOSURE

From one aspect, there is provided a manufacturing method as recited in claim 1.

Features of embodiments are set forth in the dependent claims.

The foregoing features and the operation of the invention will become more apparent in light of the following description and the accompanying drawings.

### BRIEF DESCRIPTION OF THE DRAWINGS

FIG. 1 is a side cutaway illustration of a geared turbofan turbine engine.
FIG. 2 is an illustration of a portion of a fluid cooled component.
FIG. 3 is a sectional illustration of a portion of the fluid cooled component taken along line 3-3 in FIG. 2.
FIG. 4 is an illustration of an inlet to a cooling aperture in the fluid cooled component.
FIG. 5 is an illustration of an outlet from the cooling aperture in the fluid cooled component.
FIG. 6 is a sectional illustration through the cooling aperture in a plane perpendicular to a centerline of the cooling aperture.
FIG. 7 is a flow diagram of a method for manufacturing a fluid cooled component.
FIGS. 8-11 are sectional illustrations depicting formation of the fluid cooled component at various steps.

### DETAILED DESCRIPTION

The present invention includes methods for manufacturing fluid cooled components of a gas turbine engine. For ease of description, the turbine engine may be described below as a turbofan turbine engine. The present disclosure, however, is not limited to such an exemplary gas turbine engine. The turbine engine, for example, may alternatively be configured as a turbojet turbine engine, a turboprop turbine engine, a turboshaft turbine engine, a propfan turbine engine, a pusher fan turbine engine or an auxiliary power unit (APU) turbine engine. The turbine engine may be configured as a geared turbine engine or a direct drive turbine engine. The present disclosure is also not limited to aircraft applications. The turbine engine, for example, may alternatively be configured as a ground-based industrial turbine engine for power generation, or any other type of turbine engine which utilizes fluid cooled components.

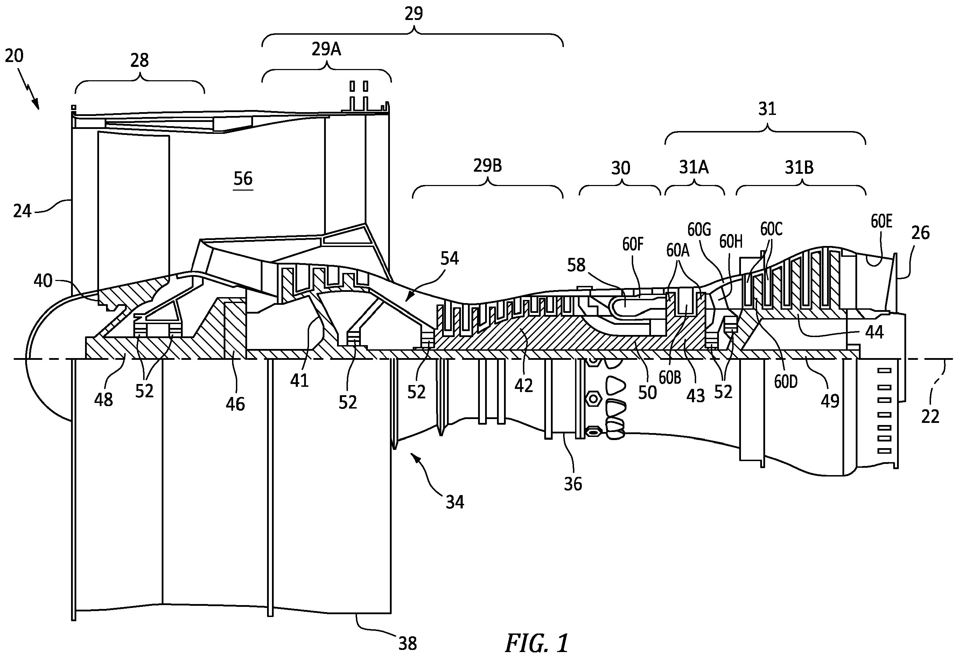

FIG. 1 is a side cutaway illustration of the turbofan turbine engine 20. This turbine engine 20 extends along an axial centerline 22 between a forward, upstream airflow inlet 24 and an aft, downstream airflow exhaust 26. The turbine engine 20 includes a fan section 28, a compressor section 29, a combustor section 30, a turbine section 31 and an exhaust section 32 (partially shown in FIG. 1). The compressor section 29 includes a low pressure compressor (LPC) section 29A and a high pressure compressor (HPC) section 29B. The turbine section 31 includes a high pressure turbine (HPT) section 31A and a low pressure turbine (LPT) section 31B.

The engine sections 28-31 are arranged sequentially along the axial centerline 22 within an engine housing 34. This engine housing 34 includes an inner case 36 (e.g., a core case) and an outer case 38 (e.g., a fan case). The inner case 36 may house one or more of the engine sections 29A-31B; e.g., a core of the turbine engine 20. The outer case 38 may house at least the fan section 28.

Each of the engine sections 28, 29A, 29B, 31A and 31B includes a respective bladed rotor 40-44. Each of these bladed rotors 40-44 includes a plurality of rotor blades arranged circumferentially around and connected to one or more respective rotor disks. The rotor blades, for example, may be formed integral with or mechanically fastened, welded, brazed, adhered and/or otherwise attached to the respective rotor disk(s).

The fan rotor 40 is connected to a geartrain 46, for example, through a fan shaft 48. The geartrain 46 and the LPC rotor 41 are connected to and driven by the LPT rotor 44 through a low speed shaft 49. The HPC rotor 42 is connected to and driven by the HPT rotor 43 through a high speed shaft 50. The shafts 48-50 are rotatably supported by a plurality of bearings 52; e.g., rolling element and/or thrust bearings. Each of these bearings 52 is connected to the engine housing 34 by at least one stationary structure such as, for example, an annular support strut.

During operation, air enters the turbine engine 20 through the airflow inlet 24. This air is directed through the fan section 28 and into a core flowpath 54 and a bypass flowpath 56. The core flowpath 54 extends sequentially through the engine sections 29A-32; e.g., the engine core. The air within the core flowpath 54 may be referred to as "core air". The bypass flowpath 56 extends through a bypass duct, which bypasses the engine core. The air within the bypass flowpath 56 may be referred to as "bypass air".

The core air is compressed by the LPC rotor 41 and the HPC rotor 42 and directed into a combustion chamber 58 of a combustor in the combustor section 30. Fuel is injected into the combustion chamber 58 and mixed with the compressed core air to provide a fuel-air mixture. This fuel air mixture is ignited and combustion products thereof flow through and sequentially cause the HPT rotor 43 and the LPT rotor 44 to rotate. The rotation of the HPT rotor 43 and the LPT rotor 44 respectively drive rotation of the HPC rotor 42 and the LPC rotor 41 and, thus, compression of the air received from a core airflow inlet. The rotation of the LPT rotor 44 also drives rotation of the fan rotor 40, which propels the bypass air through and out of the bypass flowpath 56. The propulsion of the bypass air may account for a majority of thrust generated by the turbine engine 20; e.g., more than seventy-five percent (75%) of engine thrust. The turbine engine 20 of the present disclosure, however, is not limited to the foregoing exemplary thrust ratio.

The turbine engine 20 includes a plurality of fluid cooled components (e.g., 60A-H; generally referred to as "60") arranged within, for example, the combustor section 30, the turbine section 31 and/or the exhaust section 32. Examples of these fluid cooled components 60 include airfoils such as, but not limited to, a rotor blade airfoil (e.g., 60A, 60D) and a stator vane airfoil (e.g., 60B, 60C, 60H). Other examples of the fluid cooled components 60 include flowpath walls such as, but not limited to, a combustor liner (e.g., 60F), an exhaust duct liner (e.g., 60E), a shroud or other flowpath wall (e.g., 60G), a rotor blade platform and a stator vane platform. Of course, various other fluid cooled components may be included in the turbine engine 20, and the present disclosure is not limited to any particular types or configurations thereof.

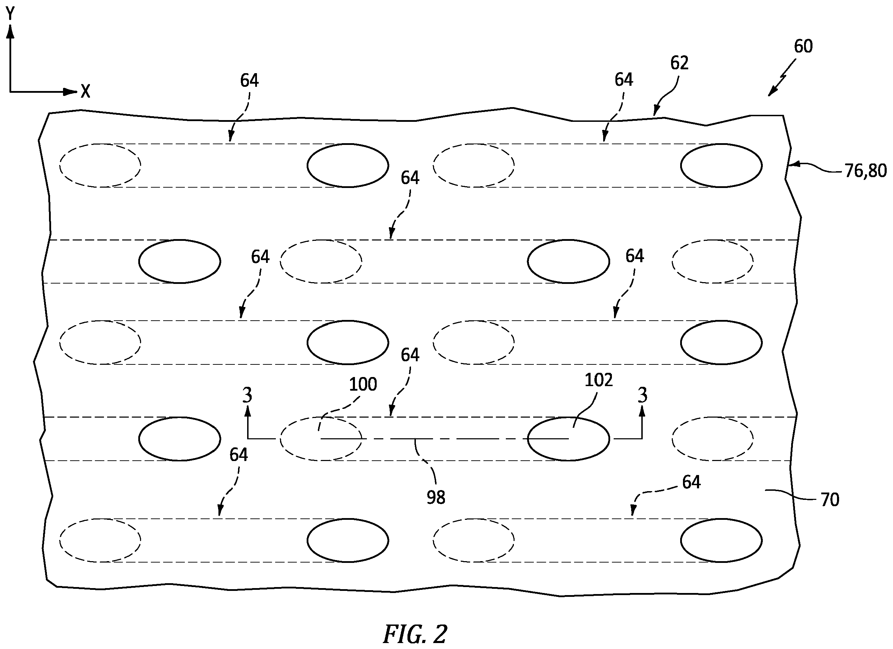

FIG. 2 illustrates a portion of one of the fluid cooled components 60 within the turbine engine 20. This fluid cooled component 60 has a component wall 62 (e.g., a sidewall or an endwall) configured with one or more cooling apertures 64 such as effusion apertures.

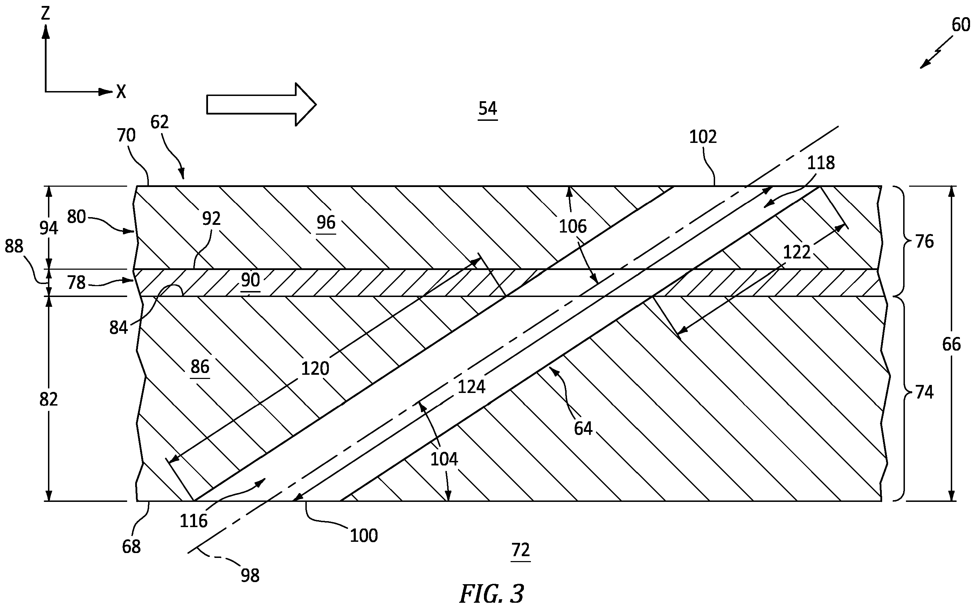

Referring to FIG. 3, the component wall 62 has a thickness 66 that extends vertically (e.g., along a z-axis) between and to a first surface 68 of the component wall 62 and a second surface 70 of the component wall 62. The component first surface 68 may be configured as an interior and/or a cold side surface of the component wall 62. The component first surface 68, for example, may at least partially form a peripheral boundary of a cooling fluid volume 72 (e.g., a cavity or a passage) along the component wall 62. The component first surface 68 may thereby be subject to relatively cool fluid (e.g., cooling air) supplied to the cooling fluid volume 72. This cooling fluid volume 72 may be an internal volume formed within the fluid cooled component 60 where, for example, the component 60 is an airfoil. Alternatively, the cooling fluid volume 72 may be an external volume formed external to the fluid cooled component 60 where, for example, the component 60 is a flowpath wall. The component second surface 70 may be configured as an exterior and/or a hot side surface of the component wall 62. The component second surface 70, for example, may at least partially form a peripheral boundary of a portion of, for example, the core flowpath 54 along the component wall 62. The component second surface 70 may thereby be subject to relative hot fluid (e.g., combustion products) flowing through the core flowpath 54 within, for example, one of the engine sections 30-32 of FIG. 1.

The component wall 62 of FIG. 3 includes a component substrate 74 and a coating system 76. The coating system 76 may include one or more external component coatings 78 and 80 over the component substrate 74.

The component substrate 74 at least partially or completely forms and carries the component first surface 68. The component substrate 74 has a thickness 82 that extends vertically (e.g., along the z-axis) between and to the component first surface 68 and a second surface 84 of the component substrate 74. The substrate second surface 84 may be configured as an exterior surface of the component substrate 74 prior to being (e.g., partially or completely) covered by the coating system 76 and its one or more component coatings 78 and 80. The substrate thickness 82 may be greater than one-half (1/2) of the wall thickness 66. The substrate thickness 82, for example, may be between two-third (2/3) and four-fifths (4/5) of the wall thickness 66. In other embodiments, however, it is contemplated the substrate thickness 82 may be greater than four-fifths (4/5) of the wall thickness 66 or less than one-half (1/2) of the wall thickness 66.

The component substrate 74 is constructed from substrate material 86. This substrate material 86 may be an electrically conductive material. The substrate material 86, for example, may be or otherwise include metal. Examples of the metal include, but are not limited to, nickel (Ni), titanium (Ti), aluminum (Al), chromium (Cr), cobalt (Co), and alloys thereof. The metal, for example, may be a nickel or cobalt based superalloy such as, but not limited to, PWA 1484 or PWA 1429.

The inner coating 78 may be configured as a bond coating between the component substrate 74 and the outer coating 80. The inner coating 78 of FIG. 3 is bonded (e.g., directly) to the substrate second surface 84. The inner coating 78 at least partially or completely covers the substrate second surface 84 (e.g., along an x-y plane of FIG. 2). The inner coating 78 has a thickness 88 that extends vertically (e.g., along the z-axis) between and to the component substrate 74 and the outer coating 80. This inner coating thickness 88 may be less than one-seventh (1/7) of the wall thickness 66. The inner coating thickness 88, for example, may be between one-eighth (1/8) and one-fortieth (1/40) of the wall thickness 66.

The inner coating 78 is constructed from inner coating material 90. This inner coating material 90 may be an electrically conductive material. The inner coating material 90, for example, may be or otherwise include metal. Examples of the metal include, but are not limited to, MCrAlY and MAlCrX, where "M" is nickel (Ni), cobalt (Co), iron (Fe) or any combination thereof, and where "Y" or "X" is hafnium (Hf), yttrium (Y), silicon (Si) or any combination thereof. The MCrAlY and MAlCrX may be further modified with strengthening elements such as, but not limited to, tantalum (Ta), rhenium (Re), tungsten (W), molybdenum (Mo) or any combination thereof. An example of the MCrAlY is PWA 286.

The inner coating 78 may be formed from a single layer of the inner coating material 90. The inner coating 78 may alternatively be formed from a plurality of layers of the inner coating material 90, where the inner coating material 90 within each of those inner coating layers may be the same as one another or different from one another.

The outer coating 80 may be configured as a protective coating for the component substrate 74 and, more generally, the fluid cooled component 60. The outer coating 80, for example, may be configured as a thermal barrier layer and/or an environmental layer. The outer coating 80 at least partially or completely forms and carries the component second surface 70. The outer coating 80 of FIG. 3 is bonded (e.g., directly) to a second (e.g., exterior) surface 92 of the inner coating 78. The outer coating 80 at least partially or completely covers the inner coating second surface 92 as well as the underlying substrate second surface 84 (e.g., along the x-y plane of FIG. 2). The outer coating 80 has a thickness 94 that extends vertically (e.g., along the z-axis) between and to the inner coating 78 and the component second surface 70. This outer coating thickness 94 may be less than one-half (1/2) of the wall thickness 66. The outer coating thickness 94, for example, may be between one-third (1/3) and one-eighth (1/8) of the wall thickness 66. In other embodiments, however, it is contemplated the outer coating thickness 94 may be greater than one-half (1/2) of the wall thickness 66 or less than one-eighth (1/8) of the wall thickness 66.

The outer coating 80 is constructed from outer coating material 96. This outer coating material 96 may be a non-electrically conductive material. The outer coating material 96, for example, may be or otherwise include ceramic. Examples of the ceramic include, but are not limited to, yttria stabilized zirconia (YSZ) and gadolinium zirconate (GdZ). The outer coating material 96 of the present disclosure is not limited to non-electrically conductive materials. In other embodiments, for example, the outer coating material 96 may be an electrically conductive material; e.g., metal.

The outer coating 80 may be formed from a single layer of the outer coating material 96. The outer coating 80 may alternatively be formed from a plurality of layers of the outer coating material 96, where the outer coating material 96 within each of those outer coating layers may be the same as one another or different from one another. For example, the outer coating 80 may include a thin interior layer of the YSZ and a thicker exterior later of the GdZ.

Each of the cooling apertures 64 extends along a longitudinal centerline 98 of the respective cooling aperture 64 between and to an inlet 100 into the respective cooling aperture 64 and an outlet 102 from the respective cooling aperture 64. This aperture centerline 98 may have a straight line geometry (e.g., in the x-y plane, in an x-z plane and/or in a y-z plane) from the cooling aperture inlet 100, through the component wall 62, to the cooling aperture outlet 102. The aperture centerline 98 of FIG. 3 is angularly offset from the component first surface 68 by a first angle 104, and the aperture centerline 98 is angularly offset from the component second surface 70 by a second angle 106. The first angle 104 of FIG. 1 may be equal to the second angle 106. The first angle 104 and the second angle 106 are each acute angles. The first angle 104 and the second angle 106, for example, may each be between ten degrees (10°) and eighty degrees (80°); e.g., between twenty degrees (20°) and forty degrees (40°), between thirty degrees (30°) and fifty degrees (50°), or between forty degrees (40°) and sixty degrees (60°). Of course, in other embodiments, the first angle 104 and the second angle 106 may each be greater than eighty degrees (80°); e.g., a ninety degree (90°) right angle.

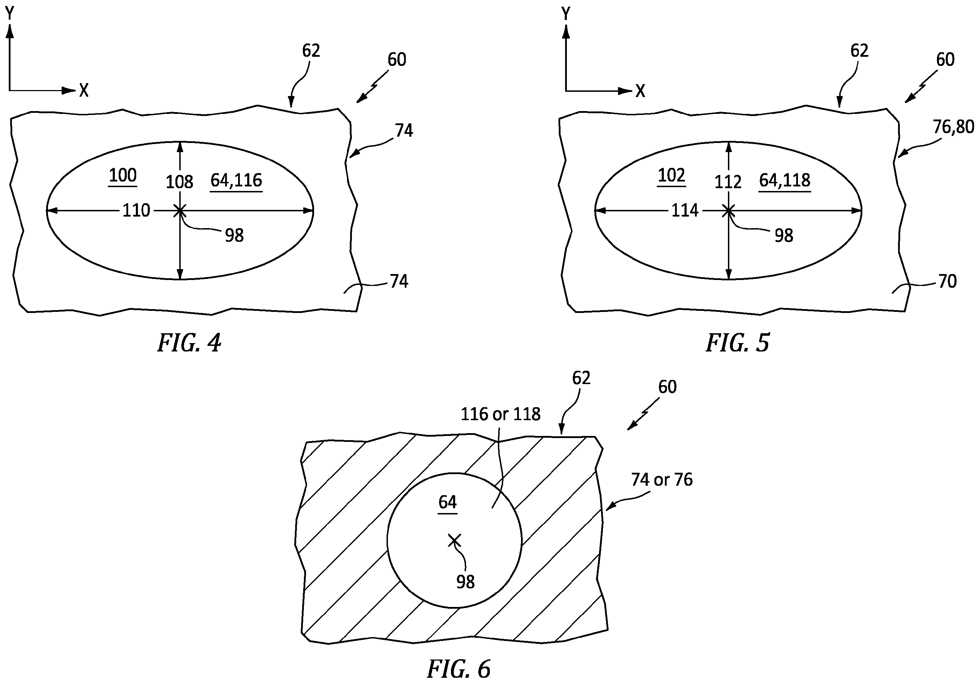

The cooling aperture inlet 100 of FIG. 3 is located in the component first surface 68. The cooling aperture inlet 100 thereby fluidly couples its respective cooling aperture 64 with the cooling fluid volume 72 along the component first surface 68. Referring to FIG. 4, the cooling aperture inlet 100 has a cross-sectional geometry when viewed in a reference plane parallel with the component first surface 68 at the respective cooling aperture inlet 100. This inlet geometry of FIG. 4 has a round shape (e.g., an oval shape) with a first dimension 108 (e.g., a minor axis dimension) and a second dimension 110 (e.g., a major axis dimension), where the second dimension 110 of FIG. 4 is greater than the first dimension 108.

The cooling aperture outlet 102 of FIG. 3 is located in the component second surface 70. The cooling aperture outlet 102 thereby fluidly couples its respective cooling aperture 64 with the core flowpath 54 along the component second surface 70. Referring to FIG. 5, the cooling aperture outlet 102 has a cross-sectional geometry when viewed in a reference plane parallel with the component second surface 70 at the respective cooling aperture outlet 102. This outlet geometry of FIG. 5 has a round shape (e.g., an oval shape) with a first dimension 112 (e.g., a minor axis dimension) and a second dimension 114 (e.g., a major axis dimension), where the second dimension 114 of FIG. 4 is greater than the first dimension 112. The outlet geometry may be exactly or substantially the same as the inlet geometry of FIG. 4. For example, the cooling aperture outlet round shape of FIG. 5 may be exactly or substantially the same as the cooling aperture inlet round shape of FIG. 4. The cooling aperture outlet first dimension 112 of FIG. 5 may be exactly or substantially equal to the cooling aperture inlet first dimension 108 of FIG. 4. The cooling aperture outlet second dimension 114 of FIG. 5 may be exactly or substantially equal to the cooling aperture inlet second dimension 110 of FIG. 4.

Referring to FIG. 3, each cooling aperture 64 may be formed by at least (or only) a substrate aperture 116 and a coating aperture 118. The substrate aperture 116 extends longitudinally along the aperture centerline 98 through the component substrate 74 from the cooling aperture inlet 100 to the coating aperture 118. The coating aperture 118 extends longitudinally along the aperture centerline 98 through the coating system 76 and its members 78 and 80 from the cooling aperture outlet 102 to the substrate aperture 116. A cross-sectional geometry (e.g., shape and dimensions) of the substrate aperture 116 along a longitudinal length 120 of that substrate aperture 116 may be uniform (e.g., constant, the same) from the cooling aperture inlet 100 to the coating aperture 118. Similarly, a cross-sectional geometry (e.g., shape and dimensions) of the coating aperture 118 along a longitudinal length 122 of that coating aperture 118 may be uniform (e.g., constant, the same) from the cooling aperture outlet 102 to the substrate aperture 116. With this arrangement, a cross-sectional geometry (e.g., shape and dimensions) of the cooling aperture 64 may be uniform (e.g., the same, constant) along a longitudinal length 124 of that cooling aperture 64 from the cooling aperture inlet 100 to the cooling aperture outlet 102. Thus, each cooling aperture 64 may be configured without a diffuser section at its cooling aperture outlet 102. The term "diffuser section" may describe a section of a cooling hole with dimensions that increase as that cooling hole section extends towards / to an outlet of the cooling hole.

Referring to FIG. 6, when viewed in a plane perpendicular to the aperture centerline 98, each aperture 64, 116, 118 may have a circular shape. Of course, in other embodiments, it is contemplated the aperture 64, 116, 118 may alternatively have a non-circular shape; e.g., an oval shape, etc.

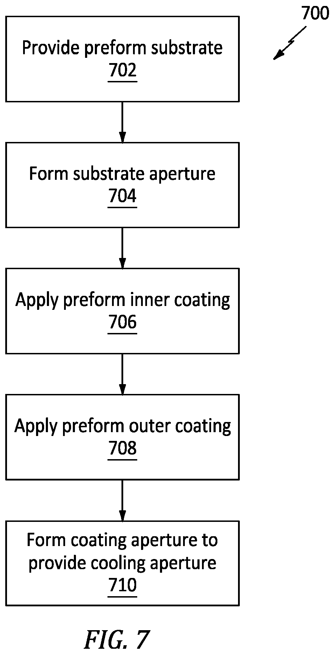

FIG. 7 is a flow diagram of a method 700 for manufacturing a fluid cooled component. For ease of description, the manufacturing method 700 is described below with reference to the fluid cooled component 60 described above. The manufacturing method 700 of the present disclosure, however, is not limited to manufacturing such an exemplary fluid cooled component.

The term "manufacturing" may describe a method for forming the fluid cooled component 60; e.g., creating a brand new fluid cooled component. The term "manufacturing" may also or alternatively describe a method for repairing the fluid cooled component 60; e.g., restoring one or more features of a previously formed fluid cooled component to brand new condition, similar to brand new condition or better than brand new condition. The fluid cooled component 60, for example, may be repaired to fix one or more defects (e.g., cracks, wear and/or other damage) imparted during previous use of the fluid cooled component 60. The fluid cooled component 60 may also or alternatively be repaired to fix one or more defects imparted during the initial formation of the fluid cooled component 60. However, for ease of description, the manufacturing method 700 is described below with respect to the initial forming of a brand new fluid cooled component 60.

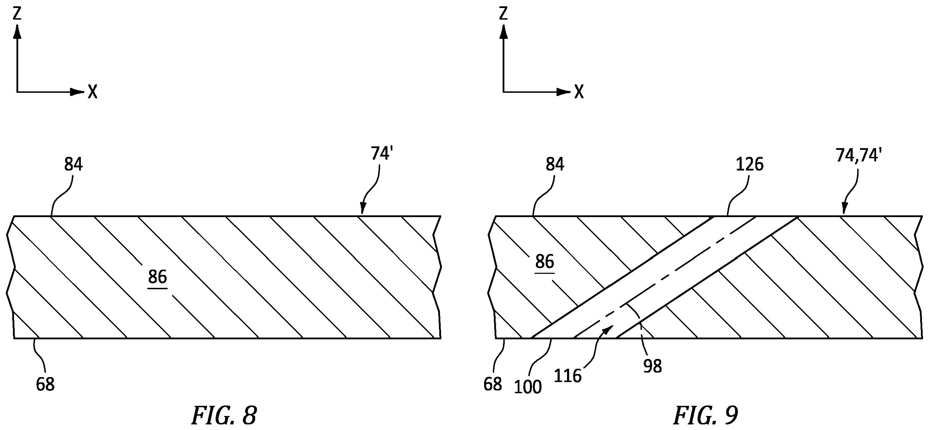

In step 702, referring to FIG. 8, a preform substrate 74' is provided. This preform substrate 74' may generally have the same configuration (e.g., shape, size, etc.) of the component substrate 74 for the fluid cooled component 60 to be formed (e.g., see FIG. 3). The preform substrate 74' of FIG. 8, however, does not include any holes therein for forming the cooling apertures 64 or their substrate apertures 116.

In step 704, referring to FIG. 9, the substrate aperture 116 of a respective cooling aperture 64 is formed in the preform substrate 74'. For example, a portion of the substrate material 86 is machined away (e.g., from an exterior or an interior of the preform substrate 74') to form the substrate aperture 116. This substrate aperture 116 extends along the aperture centerline 98 (e.g., completely) through the substrate material 86 between and to the component first surface 68 and the substrate second surface 84.

The substrate aperture 116 may be formed in the (e.g., electrically conductive, metal) substrate material 86 using a substrate machining process. This substrate machining process may be or otherwise include an electrical discharge machining (EDM) process or an abrasive water jet (AWJ) machining process. When using an EDM process, an electrode for the EDM process may be, but is not limited to, a "comb" type electrical discharge machining electrode or a high speed electrical discharge machining (HSEDM) electrode. Such substrate machining processes may quickly, precisely and efficiently form the substrate aperture 116 in the substrate material 86. Furthermore, such substrate machining processes may facilitate lower remelt thicknesses and/or a reduced propensity for cracking than when using, for example, a laser drilling process. The manufacturing method 700 of the present disclosure, however, is not limited to such an exemplary substrate machining process. The substrate aperture 116, for example, may alternatively (or also) be formed using one or more other machining processes such as, but not limited to, a laser machining process (e.g., percussion laser drilling, laser ablation, etc.), an electron beam machining process and a mechanical drilling process.

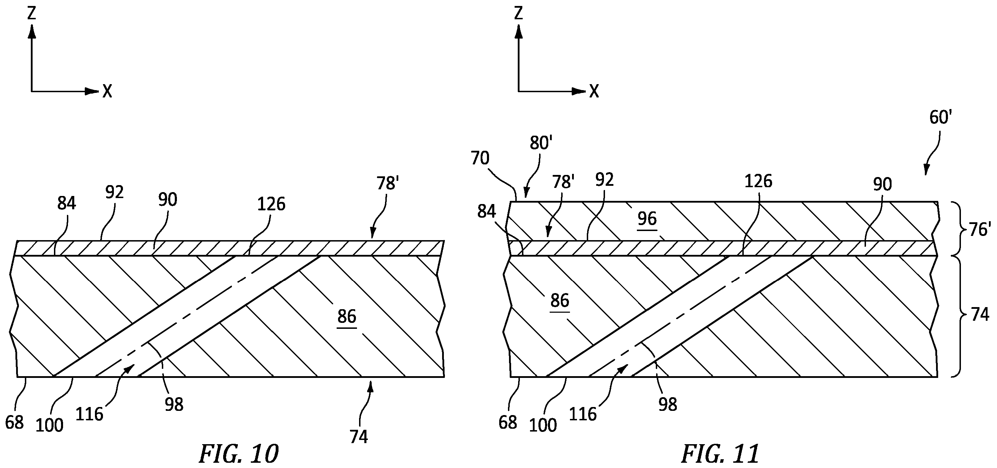

In step 706, referring to FIG. 10, a preform inner coating 78' is applied over the component substrate 74; e.g., the now apertured preform substrate 74'. The inner coating material 90, for example, may be applied (e.g., deposited) onto the substrate second surface 84 of the component substrate 74. This preform inner coating 78' may generally have the same configuration of the inner coating 78 for the fluid cooled component 60 to be formed (e.g., see FIG. 3). The preform inner coating 78' of FIG. 10, however, does not include any holes therein for forming the cooling apertures 64 or their coating apertures 118.

The inner coating material 90 may be applied using various inner coating application techniques. Examples of the inner coating application techniques include, but are not limited to, a physical vapor deposition (PVD) process, chemical vapor deposition (CVD) process, a plating process and a thermal spray process. Examples of the thermal spray process include, but are not limited to, a plasma spray (PS) process, a high velocity oxygen fuel (HVOF) process, a high velocity air fuel (HVAF) process, a wire spray process or a combustion spray process. The inner coating application may be performed via a non-line-of-sight (NLOS) coating process or a direct-line-of-sight (DLOS) coating process.

Depending upon the inner coating material 90, the inner coating thickness 88 (see FIG. 3) and/or the inner coating application technique, the inner coating material 90 may extend over and (e.g., completely) cover or otherwise cap / plug an orifice 126 of the substrate aperture 116 in the substrate second surface 84 being coated. Following this coating step 706, at least a portion or an entirety of the substrate aperture 116 may be empty. More particularly, the preform inner coating 78' may be applied while the substrate aperture 116 and its orifice 126 in the substrate second surface 84 are open. Of course, it is contemplated at least a portion (or an entirety) of the substrate aperture 116 may alternatively be plugged with masking material to reduce or prevent the inner coating material 90 from entering the substrate aperture 116.

In step 708, referring to FIG. 11, a preform outer coating 80' is applied over the component substrate 74 and the preform inner coating 78'. The outer coating material 96, for example, may be applied (e.g., deposited) onto the inner coating second surface 92 of the preform inner coating 78'. This preform outer coating 80' may generally have the same configuration of the outer coating 80 for the fluid cooled component 60 to be formed (e.g., see FIG. 3). The preform outer coating 80' of FIG. 11, however, does not include any holes therein for forming the cooling apertures 64 or their coating apertures 118. A combination of the preform inner coating 78' and the preform outer coating 80' form a preform 76' of the coating system 76 over the component substrate 74.

The outer coating material 96 may be applied using various outer coating application techniques. Examples of the outer coating application techniques include, but are not limited to, a physical vapor deposition (PVD) process, chemical vapor deposition (CVD) process, a plating process and a thermal spray process. Examples of the thermal spray process include, but are not limited to, a plasma spray (PS) process, a high velocity oxygen fuel (HVOF) process, a high velocity air fuel (HVAF) process, a wire spray process or a combustion spray process. The inner coating application may be performed via a non-line-of-sight (NLOS) coating process or a direct-line-of-sight (DLOS) coating process.

Depending upon the outer coating material 96, the outer coating thickness 94 (see FIG. 3), the outer coating application technique and/or the configuration of the preform inner coating 78', the outer coating material 96 may further extend over and (e.g., completely) cover or otherwise cap / plug the orifice 126 of the substrate aperture 116. Following this coating step 708, at least a portion or the entirety of the substrate aperture 116 may be (or remain) empty. Of course, it is contemplated at least a portion (or an entirety) of the substrate aperture 116 may alternatively be plugged with masking material to reduce or prevent the inner coating material 90 from entering the substrate aperture 116.

The combination of the component substrate 74, the preform inner coating 78' and the preform outer coating 80' may provide a preform component 60'. This preform component 60' of FIG. 11 may generally have the configuration of the fluid cooled component 60 to be formed (e.g., see FIG. 3). The preform component 60' of FIG. 11, however, does not include any holes for forming the cooling apertures 64 and their coating apertures 118 through the preform coating system 76' and its preform inner and outer coatings.

In step 710, referring to FIG. 3, the coating aperture 118 of the respective cooling aperture 64 is formed in the preform component 60' (see FIG. 11). For example, a portion of the preform coating system 76' and its outer coating material 96 and its inner coating material 90 is machined away (e.g., from the exterior of the preform component 60') to form the coating aperture 118. This formation step 710 may also remove any coating material (e.g., 90 and/or 96) which may be disposed in the substrate aperture 116. The coating aperture 118 is aligned with the substrate aperture 116. The coating aperture 118 extends along the aperture centerline 98 (e.g., completely) through the outer coating material 96 and the inner coating material 90 between and to the component second surface 70 and the substrate second surface 84. More particularly, the coating aperture 118 extends longitudinally along the aperture centerline 98, through the coating system 76, to the orifice 126 of the substrate aperture 116.

The coating aperture 118 may be formed in the coating system 76 using a coating machining process. This coating machining process may be or otherwise include a laser drilling process. The coating machining process, for example, may be a (e.g., fixed position) percussion laser drilling process. This percussion laser drilling process may be performed with a fixed position laser beam where the laser beam may be stationary through the forming of the coating aperture 118. In order words, the laser drilling may be performed without trepanning, changing an angle of attack of the laser beam, etc. The percussion laser drilling process has a pulse frequency between five and thirty hertz (Hz). More particularly, the percussion laser drilling may be performed at a low enough energy to reduce heat generation. The percussion laser drilling process may have a single pulse or a series of short pulses (e.g., less than 100 microseconds) with a high pulse frequency (e.g., greater than 100 Hertz). The percussion laser drilling process may have a single long pulse (e.g., greater than 0.500 or 1.000 milliseconds) with a series of short number of pulses superimposed on top of the long pulse. The manufacturing method 700 of the present disclosure, however, is not limited to such an exemplary coating machining process. The coating aperture 118, for example, may alternatively (or also) be formed using one or more other machining processes such as, but not limited to, a laser ablation process, an electron beam machining process and a mechanical drilling process.

By forming the substrate aperture 116 prior to applying the coating system 76, the substrate aperture 116 may be formed using precise and low cost machining processes such as the electrical discharge machining (EDM) process. In addition, heat generated during the formation of the substrate aperture 116 may be well dissipated prior to formation of a bond between the coating system 76 and the component substrate 74. It has been observed that delamination may occur between an inner coating and a substrate and/or between an inner coating and an outer coating when materials of those members are subject to relatively high heat loads. Since the coating system 76 is not applied to the component substrate 74 during the forming the substrate aperture 116, the manufacturing method 700 may prevent delamination due to formation of the cooling aperture 64 through the component substrate 74. Furthermore, since the coating machining process does not form the substrate aperture 116, the energy input to form the coating aperture 118 may also be reduced thereby further reducing potential for delamination. Reducing heat input and the potential for delamination may in turn facilitate increasing a density of the cooling apertures 64 in the component wall 62. This may be particularly useful where the component wall 62 is configured as a flowpath wall such as a combustor liner.

The substrate aperture 116 and the coating aperture 118 are aligned to form the cooling aperture 64. Various techniques may be used to facilitate this alignment. For example, the location and orientation of the substrate aperture(s) 116 may be mapped prior to the application of the coating system 76. A control system may then map out locations for forming the substrate apertures 116. In another example, various non-contact, non-destructive imaging processes may be used to locate the substrate aperture(s) 116 below the coating system 76. Examples of these imaging processes include, but are not limited to, a micro computed tomography (micro-CT) imaging process, a terahertz imaging process, a flash thermography process and a microwave imaging process.

In some embodiments, referring to FIG. 3, the coating system 76 may include multiple members. The coating system 76 of FIG. 3, for example, includes the inner coating 78 and the outer coating 80. Of course, in other embodiments, the coating system 76 may include one or more additional coatings such as, but not limited to, a corrosion resistant coating (e.g., PWA 275) and/or another ceramic coating. Alternatively, in other embodiments, the coating system 76 may be formed from a single material and/or a single coating; e.g., the outer coating 80.

The present invention as described herein includes several aspects and embodiments that include particular features. Although these features may be described individually, it is within the scope of the present invention that some or all of these features may be combined with any one of the aspects and remain within the scope of the invention, as defined by the claims.

## Claims

1. A manufacturing method, comprising:
forming a substrate aperture (116) through a substrate (74') of a preform component (60') for a turbine engine (20) using a first machining process;
applying a coating system (76) onto the substrate (74') to provide a coated substrate (74); and
forming a coating aperture (118) through the coating system (76) using a second machining process that is different than the first machining process, the second machining process comprising percussion laser drilling, and at least the substrate aperture (116) and the coating aperture (118) collectively forming a cooling aperture (64) through the coated substrate (74),
**characterised in that**
the percussion laser drilling has a pulse frequency between five and thirty hertz.

2. The manufacturing method of claim 1, wherein:
the percussion laser drilling uses a single long pulse with a series of short pulses superimposed on top of the single long pulse;
the single long pulse is greater than 0.500 microseconds; and
each of the series of short pulses is less than 100 microseconds.

3. The manufacturing method of claim 1 or 2, wherein the first machining process comprises electrical discharge machining.

4. The manufacturing method of claim 1 or 2, wherein the first machining process comprises abrasive water jet machining.

5. The manufacturing method of any preceding claim, wherein the substrate aperture (116) is empty at least at a start of the applying of the coating system (76) onto the substrate (74).

6. The manufacturing method of any preceding claim, wherein:
the cooling aperture (64) extends longitudinally along a centerline (98) through the coated substrate (74) from an inlet (100) into the cooling aperture (64) to an outlet (102) from the cooling aperture (64); and
the centerline (98) has a straight line geometry from the inlet (100) to the outlet (102).

7. The manufacturing method of any preceding claim, wherein:
the cooling aperture (64) extends longitudinally along an or the centerline (98) through the coated substrate (74) from an or the inlet (100) into the cooling aperture (64) to an or the outlet (102) from the cooling aperture (64); and
the inlet (100) and the outlet (102) have a common shape and/or common dimensions (108, 110, 112, 114).

8. The manufacturing method of any preceding claim, wherein:
the cooling aperture (64) has a longitudinal length (124) across the coated substrate (74) measured from an inlet (100) into the cooling aperture (64) to an outlet (102) from the cooling aperture (64); and
a cross-sectional geometry of the cooling aperture (64) is uniform along the longitudinal length (124).

9. The manufacturing method of any preceding claim, wherein:
the cooling aperture (64) extends longitudinally along a or the centerline (98) through the coated substrate (74) from an or the inlet (100) into the cooling aperture (64) to an or the outlet (102) from the cooling aperture (64);
the outlet (102) is formed in an exterior surface (70) of the coating system (76); and
the centerline (98) is angularly offset from the exterior surface (70) by an angle (106) between thirty and fifty degrees.

10. The manufacturing method of any of claims 1 to 8, wherein
the cooling aperture (64) extends longitudinally along a or the centerline (98) through the coated substrate (74) from an or the inlet (100) into the cooling aperture (64) to an or the outlet (102) from the cooling aperture (64);
the outlet (102) is formed in an exterior surface (70) of the coating system (76); and
the centerline (98) is angularly offset from the exterior surface (70) by an angle (106) between twenty and forty degrees, or between forty and sixty degrees.

11. The manufacturing method of any preceding claim, wherein
the substrate (74) comprises metal; and
the coating system (76) comprises a ceramic coating (80) over the metal.

12. The manufacturing method of claim 11, wherein the coating system (74) further comprises a bond coating (78) between the metal and the ceramic coating (80).

13. The manufacturing method of any preceding claim, wherein the preform component (60') comprises a preform of a flowpath wall (60) for the turbine engine (20) or a combustor liner (60F) for the turbine engine (20).

14. The manufacturing method of any preceding claim, wherein:
the substrate (74') comprises a substrate surface (84) onto which the coating system (76) is applied;
an orifice (126) to the substrate aperture (116) in the substrate surface (84) is open at least as the coating system (76) is initially applied onto the substrate surface (84); and
at least the substrate aperture (116) and the coating aperture (118) collective form a longitudinal length (124) of the cooling aperture (64) extending across the coated substrate (74) from an inlet (100) into the cooling aperture (64) to an outlet (102) from the cooling aperture (64), and a cross-sectional geometry of the cooling aperture (64) is uniform along the longitudinal length (124).

15. The manufacturing method of any preceding claim, wherein:
the substrate (74') comprises a substrate surface (84) onto which the coating system (76) is applied;
the coating system (76) extends over and covers an orifice (126) to the substrate aperture (116) in the substrate surface (84); and
the cooling aperture (64) extends longitudinally along a centerline (98) through the coated substrate (74) from an inlet (100) to the cooling aperture (64) to an outlet (102) from the cooling aperture (64), the coating aperture (118) has a coating aperture length (122) that extends longitudinally along the centerline (124) from the outlet (102), through the coating system (76), to the substrate aperture (116), and a cross-sectional geometry of the coating aperture (118) is constant along the coating aperture length (122).

## Patentansprüche

1. Fertigungsverfahren, Folgendes umfassend:
Herstellen einer Substratöffnung (116) durch ein Substrat (74') einer Vorformkomponente (60') für einen Turbinenmotor (20) unter Verwendung eines ersten Bearbeitungsprozesses;
Aufbringen eines Beschichtungssystems (76) auf das Substrat (74'), um ein beschichtetes Substrat (74) bereitzustellen; und Herstellen einer Beschichtungsöffnung (118) durch das Beschichtungssystem (76) unter Verwendung eines zweiten Bearbeitungsprozesses, der sich von dem ersten Bearbeitungsprozess unterscheidet, wobei der zweite Bearbeitungsprozess Laser-Perkussionsbohren umfasst und mindestens die Substratöffnung (116) und die Beschichtungsöffnung (118) zusammen eine Kühlöffnung (64) durch das beschichtete Substrat (74) herstellen,
**dadurch gekennzeichnet, dass**
das Laser-Perkussionsbohren eine Impulsfrequenz zwischen fünf und dreißig Hertz aufweist.

2. Fertigungsverfahren nach Anspruch 1, wobei:
beim Laser-Perkussionsbohren ein einzelner langer Impuls verwendet wird, wobei eine Reihe kurzer Impulse dem einzelnen langen Impuls überlagert ist;
der einzelne lange Impuls mehr als 0,500 Mikrosekunden beträgt; und
jeder der Reihe kurzer Impulse weniger als 100 Mikrosekunden beträgt.

3. Fertigungsverfahren nach Anspruch 1 oder 2, wobei der erste Bearbeitungsprozess Funkenerodieren umfasst.

4. Fertigungsverfahren nach Anspruch 1 oder 2, wobei der erste Bearbeitungsprozess abrasive Wasserstrahlbearbeitung umfasst.

5. Fertigungsverfahren nach einem der vorhergehenden Ansprüche, wobei die Substratöffnung (116) mindestens zu Beginn des Aufbringens des Beschichtungssystems (76) auf das Substrat (74) leer ist.

6. Fertigungsverfahren nach einem der vorhergehenden Ansprüche, wobei:
sich die Kühlöffnung (64) in Längsrichtung entlang einer Mittellinie (98) durch das beschichtete Substrat (74) von einem Einlass (100) in die Kühlöffnung (64) zu einem Auslass (102) aus der Kühlöffnung (64) erstreckt; und
die Mittellinie (98) eine geradlinige Geometrie von dem Einlass (100) zu dem Auslass (102) aufweist.

7. Fertigungsverfahren nach einem der vorhergehenden Ansprüche, wobei:
sich die Kühlöffnung (64) in Längsrichtung entlang einer oder der Mittellinie (98) durch das beschichtete Substrat (74) von einem oder dem Einlass (100) in die Kühlöffnung (64) zu einem oder dem Auslass (102) aus der Kühlöffnung (64) erstreckt; und
der Einlass (100) und der Auslass (102) eine gemeinsame Form und/oder gemeinsame Abmessungen (108, 110, 112, 114) aufweisen.

8. Fertigungsverfahren nach einem der vorhergehenden Ansprüche, wobei:
die Kühlöffnung (64) eine Längserstreckung (124) quer über das beschichtete Substrat (74) aufweist, gemessen von einem Einlass (100) in die Kühlöffnung (64) bis zu einem Auslass (102) aus der Kühlöffnung (64); und
die Querschnittsgeometrie der Kühlöffnung (64) entlang der Längserstreckung (124) einheitlich ist.

9. Fertigungsverfahren nach einem der vorhergehenden Ansprüche, wobei:
sich die Kühlöffnung (64) in Längsrichtung entlang einer oder der Mittellinie (98) durch das beschichtete Substrat (74) von einem oder dem Einlass (100) in die Kühlöffnung (64) zu einem oder dem Auslass (102) aus der Kühlöffnung (64) erstreckt;
der Auslass (102) in einer Außenfläche (70) des Beschichtungssystems (76) gebildet ist; und
die Mittellinie (98) gegenüber der Außenfläche (70) um einen Winkel (106) zwischen dreißig und fünfzig Grad versetzt ist.

10. Fertigungsverfahren nach einem der Ansprüche 1 bis 8, wobei sich die Kühlöffnung (64) in Längsrichtung entlang einer oder der Mittellinie (98) durch das beschichtete Substrat (74) von einem oder dem Einlass (100) in die Kühlöffnung (64) zu einem oder dem Auslass (102) aus der Kühlöffnung (64) erstreckt;
der Auslass (102) in einer Außenfläche (70) des Beschichtungssystems (76) gebildet ist; und
die Mittellinie (98) gegenüber der Außenfläche (70) um einen Winkel (106) zwischen zwanzig und vierzig Grad oder zwischen vierzig und sechzig Grad versetzt ist.

11. Fertigungsverfahren nach einem der vorhergehenden Ansprüche, wobei
das Substrat (74) Metall umfasst; und
das Beschichtungssystem (76) eine Keramikbeschichtung (80) über dem Metall umfasst.

12. Fertigungsverfahren nach Anspruch 11, wobei das Beschichtungssystem (74) ferner einen Verbundüberzug (78) zwischen dem Metall und der Keramikbeschichtung (80) umfasst.

13. Fertigungsverfahren nach einem der vorhergehenden Ansprüche, wobei die Vorformkomponente (60') eine Vorform einer Strömungskanalwand (60) für den Turbinenmotor (20) oder eine Brennkammerauskleidung (60F) für den Turbinenmotor (20) umfasst.

14. Fertigungsverfahren nach einem der vorhergehenden Ansprüche, wobei:
das Substrat (74') eine Substratfläche (84), auf die das Beschichtungssystem (76) aufgebracht wird, umfasst;
eine Mündung (126) zu der Substratöffnung (116) in der Substratfläche (84) mindestens während des ersten Aufbringens des Beschichtungssystems (76) auf die Substratfläche (84) geöffnet ist; und
mindestens die Substratöffnung (116) und die Beschichtungsöffnung (118) zusammen eine Längserstreckung (124) der Kühlöffnung (64) bilden, die sich über das beschichtete Substrat (74) von einem Einlass (100) in die Kühlöffnung (64) zu einem Auslass (102) aus der Kühlöffnung (64) erstreckt, und die Querschnittsgeometrie der Kühlöffnung (64) entlang der Längserstreckung (124) einheitlich ist.

15. Fertigungsverfahren nach einem der vorhergehenden Ansprüche, wobei:
das Substrat (74') eine Substratfläche (84), auf die das Beschichtungssystem (76) aufgebracht wird, umfasst;
sich das Beschichtungssystem (76) über eine Mündung (126) zu der Substratöffnung (116) in der Substratfläche (84) erstreckt und diese bedeckt; und
sich die Kühlöffnung (64) in Längsrichtung entlang einer Mittellinie (98) durch das beschichtete Substrat (74) von einem Einlass (100) zu der Kühlöffnung (64) zu einem Auslass (102) von der Kühlöffnung (64) erstreckt, die Beschichtungsöffnung (118) eine Beschichtungsöffnungserstreckung (122) aufweist, die sich in Längsrichtung entlang der Mittellinie (124) von dem Auslass (102) durch das Beschichtungssystem (76) zu der Substratöffnung (116) erstreckt, und die Querschnittsgeometrie der Beschichtungsöffnung (118) entlang der Beschichtungsöffnungserstreckung (122) konstant ist.

## Revendications

1. Procédé de fabrication, comprenant :
la formation d'une ouverture de substrat (116) à travers un substrat (74') d'un composant de préforme (60') pour un moteur à turbine (20) en utilisant un premier processus d'usinage ;
l'application d'un système de revêtement (76) sur le substrat (74') pour obtenir un substrat revêtu (74) ; et
la formation d'une ouverture de revêtement (118) à travers le système de revêtement (76) en utilisant un second processus d'usinage qui est différent du premier processus d'usinage, le second processus d'usinage comprenant un perçage laser par percussion, et au moins l'ouverture de substrat (116) et l'ouverture de revêtement (118) formant collectivement une ouverture de refroidissement (64) à travers le substrat revêtu (74),
**caractérisé en ce que**
le perçage laser par percussion a une fréquence d'impulsion comprise entre cinq et trente hertz.

2. Procédé de fabrication selon la revendication 1, dans lequel :
le perçage laser par percussion utilise une unique impulsion longue avec une série d'impulsions courtes superposées sur l'unique impulsion longue ;
l'unique impulsion longue est supérieure à 0,500 microseconde ; et
chacune de la série d'impulsions courtes est inférieure à 100 microsecondes.

3. Procédé de fabrication selon la revendication 1 ou 2, dans lequel le premier processus d'usinage comprend l'usinage par décharge électrique.

4. Procédé de fabrication selon la revendication 1 ou 2, dans lequel le premier processus d'usinage comprend l'usinage par jet d'eau abrasif.

5. Procédé de fabrication selon une quelconque revendication précédente, dans lequel l'ouverture de substrat (116) est vide au moins au niveau d'un début de l'application du système de revêtement (76) sur le substrat (74).

6. Procédé de fabrication selon une quelconque revendication précédente, dans lequel :
l'ouverture de refroidissement (64) s'étend longitudinalement le long d'une ligne centrale (98) à travers le substrat revêtu (74) depuis une entrée (100) dans l'ouverture de refroidissement (64) jusqu'à une sortie (102) de l'ouverture de refroidissement (64) ; et
la ligne centrale (98) a une géométrie de ligne droite de l'entrée (100) à la sortie (102).

7. Procédé de fabrication selon une quelconque revendication précédente, dans lequel :
l'ouverture de refroidissement (64) s'étend longitudinalement le long d'une ou de la ligne centrale (98) à travers le substrat revêtu (74) depuis une ou l'entrée (100) dans l'ouverture de refroidissement (64) jusqu'à une ou la sortie (102) de l'ouverture de refroidissement (64) ; et
l'entrée (100) et la sortie (102) ont une forme commune et/ou des dimensions communes (108, 110, 112, 114).

8. Procédé de fabrication selon une quelconque revendication précédente, dans lequel :
l'ouverture de refroidissement (64) a une longueur longitudinale (124) à travers le substrat revêtu (74) mesurée d'une entrée (100) dans l'ouverture de refroidissement (64) à une sortie (102) de l'ouverture de refroidissement (64) ; et
la géométrie en section transversale de l'ouverture de refroidissement (64) est uniforme le long de la longueur longitudinale (124).

9. Procédé de fabrication selon une quelconque revendication précédente, dans lequel :
l'ouverture de refroidissement (64) s'étend longitudinalement le long d'une ou de la ligne centrale (98) à travers le substrat revêtu (74) depuis une ou l'entrée (100) dans l'ouverture de refroidissement (64) jusqu'à une ou la sortie (102) de l'ouverture de refroidissement (64) ;
la sortie (102) est formé dans une surface extérieure (70) du système de revêtement (76) ; et
la ligne centrale (98) est décalée angulairement par rapport à la surface extérieure (70) d'un angle (106) compris entre trente et cinquante degrés.

10. Procédé de fabrication selon l'une quelconque des revendications 1 à 8, dans lequel
l'ouverture de refroidissement (64) s'étend longitudinalement le long d'une ou de la ligne centrale (98) à travers le substrat revêtu (74) depuis une ou l'entrée (100) dans l'ouverture de refroidissement (64) jusqu'à une ou la sortie (102) de l'ouverture de refroidissement (64) ;
la sortie (102) est formé dans une surface extérieure (70) du système de revêtement (76) ; et
la ligne centrale (98) est décalée angulairement par rapport à la surface extérieure (70) d'un angle (106) compris entre vingt et quarante degrés, ou entre quarante et soixante degrés.

11. Procédé de fabrication selon une quelconque revendication précédente, dans lequel
le substrat (74) comprend du métal ; et
le système de revêtement (76) comprend un revêtement céramique (80) sur le métal.

12. Procédé de fabrication selon la revendication 11, dans lequel le système de revêtement (74) comprend en outre un revêtement de liaison (78) entre le métal et le revêtement céramique (80).

13. Procédé de fabrication selon une quelconque revendication précédente, dans lequel le composant de préforme (60) comprend une préforme d'une paroi de trajet d'écoulement (60) pour le moteur à turbine (20) ou une chemise de chambre de combustion (60F) pour le moteur à turbine (20).

14. Procédé de fabrication selon une quelconque revendication précédente, dans lequel :
le substrat (74') comprend une surface de substrat (84) sur laquelle le système de revêtement (76) est appliqué ;
un orifice (126) vers l'ouverture de substrat (116) dans la surface de substrat (84) est ouvert au moins lorsque le système de revêtement (76) est initialement appliqué sur la surface de substrat (84) ; et
au moins l'ouverture de substrat (116) et l'ouverture de revêtement (118) forment collectivement une longueur longitudinale (124) de l'ouverture de refroidissement (64) s'étendant à travers le substrat revêtu (74) d'une entrée (100) dans l'ouverture de refroidissement (64) à une sortie (102) de l'ouverture de refroidissement (64), et une géométrie en section transversale de l'ouverture de refroidissement (64) est uniforme le long de la longueur longitudinale (124).

15. Procédé de fabrication selon une quelconque revendication précédente, dans lequel :
le substrat (74') comprend une surface de substrat (84) sur laquelle le système de revêtement (76) est appliqué ;
le système de revêtement (76) s'étend sur et recouvre un orifice (126) jusqu'à l'ouverture de substrat (116) dans la surface de substrat (84) ; et
l'ouverture de refroidissement (64) s'étend longitudinalement le long d'une ligne centrale (98) à travers le substrat revêtu (74) depuis une entrée (100) dans l'ouverture de refroidissement (64) à une sortie (102) de l'ouverture de refroidissement (64), l'ouverture de revêtement (118) a une longueur d'ouverture de revêtement (122) qui s'étend longitudinalement le long de la ligne centrale (124) depuis la sortie (102), à travers le système de revêtement (76), jusqu'à l'ouverture de substrat (116), et une géométrie en section transversale de l'ouverture de revêtement (118) est constante le long de la longueur de l'ouverture de revêtement (122).
